# EUROPEAN PATENT APPLICATION

(11) **EP 4 716 306 A1**
(43) Date of publication of application: **25.03.2026**
(21) Application number: 24832237.2
(22) Date of filing: 10.05.2024
(51) Int. Cl.: H04W 40/34, H04W 40/24, H04L 41/0895, H04W 84/04

(54) **METHOD AND SYSTEM FOR CONTROLLING SCALING OF VIRTUALIZED RADIO ACCESS NETWORK**

(30) Priority: 29.06.2023 KR 20230084485; 14.09.2023 KR 20230122661
(71) Applicant: Samsung Electronics Co., Ltd., Suwon-si, Gyeonggi-do 16677 (KR)
(72) Inventor: KIM, Taeyoung, Suwon-si, Gyeonggi-do 16677 (KR); HONG, Youngki, Suwon-si, Gyeonggi-do 16677 (KR); KWON, Joonhwan, Suwon-si, Gyeonggi-do 16677 (KR)
(74) Representative: Appleyard Lees IP LLP
(86) International application number: PCT/KR2024/006350
(87) International publication number: WO 2025/005453

(57) **Abstract**

The present disclosure relates to a technology for performing a function of a radio network access network. According to an embodiment of the present disclosure, included are identifying a scaling situation from among a scale-in or a scale-out, based on information about a key performance indicator (KPI) of at least one DU, identifying, based on the identified scaling situation, a first cell to be scaled, a first DU which migrates the first cell, and a second DU to which the first cell is migrated, delivering fronthaul path switching information to the first DU and the second DU, and changing, based on the fronthaul path switching information, a media access control (MAC) address of a fronthaul interface of the first DU corresponding to the first cell and a MAC address of a fronthaul interface of the second DU.

## Description

### TECHNICAL FIELD

Embodiments disclosed in this document relate to a method and system for controlling scaling of a virtualized wireless access network.

### BACKGROUND ART

In a radio access network (RAN) system, one cell site is connected to one distributed unit (DU), and the processing capacity of the DU is determined by the maximum traffic which can enter the cell site. Resources of the DU are not used outside of peak traffic hours.

In a virtualized RAN (vRAN) system, resource pooling may be performed by virtualizing a DU or a centralized unit (CU) into a virtualized DU (vDU) and a virtualized CU (vCU). When resource pooling is performed, a plurality of cell sites may be associated with a DU, reducing the number of servers required.

A 1:1 connection relationship may be established between a DU and a cell site (e.g., a set of radio units (RUs)), and vDU pooling may indicate a technology that may reduce the number of servers by breaking this 1:1 connection relationship and virtualizing same through DU pooling.

Scaling may indicate an operation of, when the traffic throughput of these servers reaches a predetermined or policy-based standard, adding servers with similar specifications or reducing the number of servers which are no longer needed.

### DISCLOSURE OF INVENTION

### SOLUTION TO PROBLEM

A method of controlling distributed unit (DU) scaling in a virtualized radio access network (v-RAN), according to an embodiment, includes identifying, based on information about a key performance indicator (KPI) of at least one DU, a scaling situation from among a scale-in or a scale-out, identifying, based on the identified scaling situation, a first cell to be scaled, a first DU which migrates the first cell, and a second DU to which the first cell is migrated, delivering fronthaul path switching information to the first DU and the second DU, and changing, based on the fronthaul path switching information, a media access control (MAC) address of a fronthaul interface of the first DU corresponding to the first cell and a MAC address of a fronthaul interface of the second DU.

A computer-readable recording medium according to an embodiment may include one or more program codes. In the at least one program code, when executed by an electronic device, performed in a method of performing distributed unit (DU) scaling are identifying, based on information about a key performance indicator (KPI) of at least one DU, a scaling situation from among a scale-in or a scale-out, identifying, based on the identified scaling situation, a first cell to be scaled, a first DU which migrates the first cell, and a second DU to which the first cell is migrated, delivering fronthaul path switching information to the first DU and the second DU, and changing, based on the fronthaul path switching information, a media access control (MAC) address of a fronthaul interface of the first DU corresponding to the first cell and a MAC address of a fronthaul interface of the second DU.

In a virtualized radio access network (v-RAN) system in which a method of controlling scaling is performed, according to an embodiment, the v-RAN system comprises an electronic device, at least one distributed unit (DU), and at least one cell, and the electronic device identifies, based on information about a key performance indicator (KPI) of at least one DU, a scaling situation from among a scale-in or a scale-out, identifies, based on the identified scaling situation, a first cell to be scaled from among the at least one cell, a first DU which migrates the first cell from among the at least one DU, and a second DU to which the first cell is migrated, and migrates fronthaul path switching information to the first DU and the second DU, and the first DU and the second DU change, based on the fronthaul path switching information, a fronthaul media access control (MAC) address of the first DU corresponding to the first cell and a fronthaul MAC address of the second DU.

A method of controlling scaling, according to an embodiment, includes identifying, based on information about a key performance indicator (KPI) of at least one distributed unit (DU), a scaling situation from among a scale-in or a scale-out, identifying, based on the identified scaling situation, a first cell to be scaled, a first DU which migrates the first cell, and a second DU to which the first cell is migrated, migrating fronthaul path switching information to the first DU and the second DU, and changing, based on the fronthaul path switching information, a media access control (MAC) address of a fronthaul interface of the first DU corresponding to the first cell in a radio unit (RU) connected to the first cell to a MAC address of a fronthaul interface of the second DU.

A computer-readable recording medium according to an embodiment may include one or more program codes. The one or more program codes, when executed by an electronic device, perform identifying one scaling situation from among scale-in or scale-out, based on information about a key performance indicator (KPI) of at least one distributed unit (DU), identifying, based on the identified scaling situation, a first cell to be scaled, a first DU which migrates the first cell, and a second DU to which the first cell is migrated, delivering fronthaul path switching information to the first DU and the second DU, and changing, based on the fronthaul path switching information, a media access control (MAC) address of a fronthaul interface of the first DU corresponding to the first cell in a radio unit (RU) connected to the first cell to a MAC address of a fronthaul interface of the second DU.

In a virtualized radio access network (v-RAN) system in which a method of controlling scaling is performed, according to an embodiment, the v-RAN system includes an electronic device, at least one distributed unit (DU), at least one radio unit (RU), and at least one cell, wherein the electronic device identifies one scaling situation from among scale-in or scale-out, based on information about a key performance indicator (KPI) of the at least one DU, identifies, based on the identified scaling situation, a first cell to be scaled from among the at least one cell, a first DU which migrates the first cell from among the at least one DU, and a second DU to which the first cell is migrated, and delivers fronthaul path switching information to the first DU and the second DU, and an RU connected to the first cell from among the at least one RU changes a media access control (MAC) address of a fronthaul interface of the first DU corresponding to the first cell in an RU connected to the first cell to a MAC address of a fronthaul interface of the second DU.

### BRIEF DESCRIPTION OF DRAWINGS

FIG. 1 illustrates a virtualization-radio access network (RAN) (v-RAN) according to an embodiment.
FIG. 2 illustrates a distributed unit (DU) according to an embodiment.
FIG. 3 is a graph showing changes in relative traffic volume over time.
FIG. 4A illustrates a scale-out situation according to an embodiment.
FIG. 4B illustrates a DU and radio unit (RU), on which scale-out according to an embodiment has been performed.
FIG. 5A illustrates a scale-in situation according to an embodiment.
FIG. 5B illustrates a DU and an RU, on which scale-in according to an embodiment has been performed.
FIG. 6 illustrates a v-RAN and a core network, according to an embodiment.
FIG. 7 illustrates a flowchart of migrating a cell by modifying a media access control (MAC) address of a fronthaul interface of a DU, according to an embodiment.
FIG. 8 illustrates the impact of a MAC address table update time of a switch on a fronthaul, according to an embodiment.
FIG. 9 illustrates the impact of scaling time of other modules on a fronthaul, according to an embodiment.
FIG. 10 illustrates the impact of using a dummy packet on a fronthaul, according to an embodiment.
FIG. 11 is a flowchart illustrating scaling by modifying RU configuration information, according to an embodiment.
FIG. 12 is a block diagram illustrating a configuration of an electronic device according to an embodiment.

### MODE FOR THE INVENTION

In the present disclosure, the expression "at least one of a, b or c" can refer to "a", "b", "c", "a and b", "a and c", "b and c", "all of a, b, and c", or variations thereof.

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description. Thus, the terms used in the present disclosure have to be defined based on the meaning of the terms together with the description throughout the present disclosure.

An expression used in the singular may encompass the expression in the plural, unless it has a clearly different meaning in the context. Terms used herein, including technical or scientific terms, may have the same meaning as commonly understood by one of ordinary skill in the art described in the present specification. In addition, terms including ordinal numbers, such as "first" or "second," used in the present specification may be used to describe various components, but the components should not be limited by the terms. The above terms are used only to distinguish one component from another component.

Throughout the specification, when a part "includes" or "comprises" an element, unless there is a particular description contrary thereto, the part may further include other elements, not excluding the other elements. In addition, terms such as "unit", "module", and the like used in the specification indicate a unit which processes at least one function or operation, and the unit and the module may be implemented by hardware or software, or by a combination of hardware and software.

Below, with reference to the attached drawings, an embodiment of the present disclosure is described in detail so that a person skilled in the art can easily practice the present disclosure. However, the present disclosure may be implemented in various different forms and is not limited to the embodiments described herein. Also, in the drawings, parts irrelevant to the description are omitted in order to clearly describe the present disclosure, and like reference numerals designate like elements throughout the specification. In addition, the drawing symbols used in each drawing are only intended to describe each drawing, and different drawing symbols used in different drawings are not intended to indicate different elements.

Throughout the specification, when a part is "connected" to another part, the part may not only be "directly connected" or "physically connected" to the other part, but may also be "electrically connected" to the other part with another element therebetween. In the present disclosure, the terms "transmit", "receive", and "communicate" include both direct and indirect communications. In addition, when a part is described to "include" (or comprise) a component, this does not mean that it excludes other components, but rather that it may include other components, unless otherwise specifically stated.

Throughout the present disclosure, unless otherwise specifically stated, "or" is inclusive and not exclusive. Thus, unless explicitly indicated otherwise or the context indicates otherwise, "A or B" may indicate "A, B, or both". In the present disclosure, the phrases "at least one of" or "one or more of" can indicate that different combinations of one or more of the listed items may be used, or that only any one of the listed items is required. For example, "at least one of A, B, and C" can include any of the following combinations: A, B, C, A and B, A and C, B and C, or A and B and C.

It should be understood that the blocks and combinations of the flowcharts in each flowchart can be performed by one or more computer programs including computer-executable instructions. The one or more computer programs may be stored entirely in a single memory, or may be split across a plurality of different memories.

Any function or operation described in the present document may be performed by a single processor or a combination of processors. A processor or a combination of processors is a circuitry which performs processing, and may include circuitry such as an Application Processor (AP), a Communication Processor (CP), a Graphical Processing Unit (GPU), a Neural Processing Unit (NPU), a Microprocessor Unit (MPU), a System on Chip (SoC), an Integrated Chip (IC), and the like.

"Controller" may indicate any device, system or part thereof which controls at least one operation. The controller may be implemented in hardware, a combination of hardware and software, or firmware. Functions associated with a particular controller may be centralized or distributed, local or remote.

A computer-readable medium may be provided in a form of a non-transitory storage medium. Here, a "non-transitory storage medium" is a tangible device and may exclude wired, wireless, optical, or other communication links which transmit transitory electrical or other signals. Meanwhile, this "non-transitory storage medium" does not distinguish between cases where data is stored semi-permanently or temporarily on the storage medium. For example, the "non-transitory storage medium" may include a buffer where data is temporarily stored. The computer-readable medium may be an arbitrary available medium accessible by a computer, and may include all volatile and non-volatile media and separable and non-separable media. The computer-readable medium includes media on which data can be permanently stored and media on which data can be stored and later overwritten, such as a rewritable optical disk or an erasable memory device.

According to an embodiment, a method according to various embodiments disclosed in the present document may be provided by being included in a computer program product. The computer program product is a product which can be traded between sellers and buyers. The computer program product may be distributed in a form of machine-readable storage medium (for example, a compact disc read-only memory (CD-ROM)), or may be distributed (for example, downloaded or uploaded) through an application store (for example, Play Store^{™}) or directly or online between two user devices (for example, smartphones). In the case of online distribution, at least a part of the computer program product (for example, a downloadable application) may be at least temporarily generated or temporarily stored in a machine-readable storage medium, such as a server of a manufacturer, a server of an application store, or memory of a relay server.

Definitions for other specific words and phrases may be provided throughout the present disclosure. A person skilled in the art to which the present disclosure pertains would appreciate that, in many cases, the defined words and phrases apply to past and future usages as well.

Each component described below in the present specification may additionally perform some or all of the functions performed by other components in addition to its own main function, and some of the main functions of each component may be performed entirely by other components.

In the present disclosure, the terms "centralized unit (CU)" and "distributed unit (DU)" may be used interchangeably or alternatively with the term "pod".

In the present disclosure, the term "scaling" may indicate an operation of moving cells connected to a certain DU to another DU according to a set of criteria. In addition, the term "scaling" may include the act of creating a DU to which a cell is to be moved before moving the cell, or deleting a DU to which a cell is to be moved after moving the cell. In addition, the term "scaling" may be used as a general term for both scale-in and scale-out operations.

In the present disclosure, the term "scale in" may indicate an operation of disconnecting a cell and a DU according to a set of criteria, connecting a cell to another DU, and aggregating the throughput to the other DU. The scale-in operation may reduce the number of DUs which no longer need processing, thereby reducing the required resources.

In the present disclosure, the term "scale out" may indicate an operation of generating a DU according to a set criteria and migrating cells to the generated DU to distribute the throughput. In other words, scale-out may indicate improving overall performance by adding DUs with similar specifications to share the load of existing DUs when the capacity or performance of a DU reaches the limit thereof.

In the present disclosure, the term "cell migration" may indicate an operation of migrating a cell handled by a specific DU to another DU. In addition, "migration" may be used in the present specification with the same meaning as cell migration.

In the present disclosure, the term "switching" may indicate a process of changing the connections between pods and cells.

In the present disclosure, the term "traffic" may indicate the volume of data flowing within a certain period of time through network devices, such as servers and switches. In addition, the term "traffic"" may be used in the present disclosure as an alternative to or in addition to "data traffic".

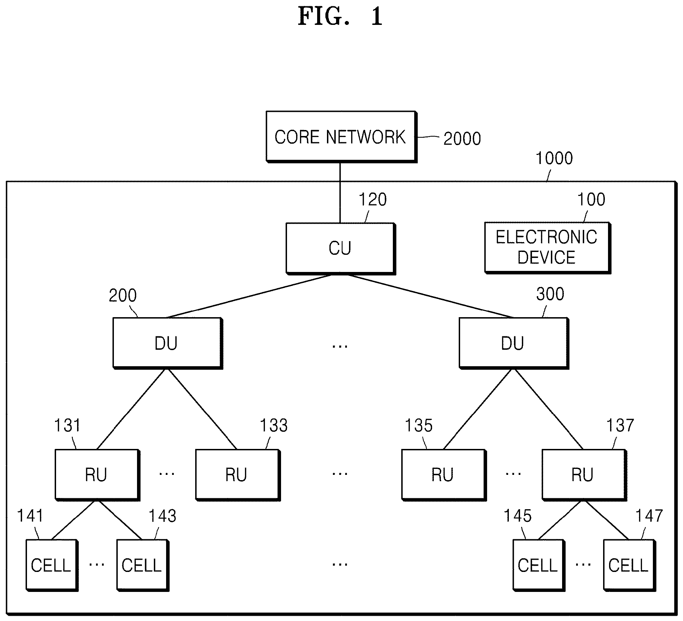

FIG. 1 illustrates a virtualized radio access network (RAN) and a core network according to an embodiment of the present disclosure.

Referring to FIG. 1, a network according to an embodiment of the present disclosure may include a virtualized RAN 1000 and a core network 2000. The virtualized RAN 1000 may connect a user device (e.g. a smartphone or a tablet) to the core network 2000. The virtualized RAN 1000 may transmit data and signals between base stations and user devices by using radio access technology. For example, the virtualized RAN 1000 may handle initial connection of the user device, data transmission between a base station and the user device, transmission and reception of user data and control commands between the core network 2000 and the user device, and Quality of Service (QoS) control for each terminal service.

According to an embodiment, the virtualized RAN 1000 may virtualize a network structure within the base station and access network by using software technology and virtualization technology, and accordingly, a centralized data center or cloud may manage each network structure. For example, a CU 120 of the virtualized RAN 1000 according to an embodiment may be implemented as a virtualized-CU (vCU), and a plurality of DUs 200, ..., 300 may be implemented as virtualized-DUs (vDUs). When the CU 120 and the plurality of DUs 200, ..., 300 according to an embodiment are implemented as vCU and vDUs, the CU 120 and the plurality of DUs 200, ..., 300 may perform functions of the CU and DU as physical hardware devices or software modules.

In a case where the plurality of DUs 200, ..., 300 according to an embodiment are implemented as vDUs, vDU pooling technology may be applied to the plurality of DUs 200, ..., 300. vDU pooling technology may break the 1:1 matching relationship between a non-virtualized DU and a cell (or a set of RUs) and pool and virtualize the DU, thereby reducing the number of servers required for establishing a RAN system. Thus, the vDU pooling technology may reduce capital expenditure (CAPEX), and reduce power consumption to reduce operational expenditure (OPEX).

Similar to the plurality of DUs 200, ..., 300 implemented as vDUs, the CU 120 may also be implemented as a vCU, and when the CU is implemented as a vCU, CAPEX and OPEX reduction effects may be obtained.

Here, the term "virtualization" may indicate a technology which can expand resources available on a single device by integrating and managing a plurality of physical resources.

In the present disclosure, a case is assumed and described in which the CU 120 and the plurality of DUs 200, ..., 300 are implemented as virtualized vCU and cDUs for vRAN.

The core network 2000 according to an embodiment is the center of a mobile communication network and may perform a role of controlling and managing core functions of the mobile communication system. For example, the core network 2000 may perform functions of user authentication and identification, line control, location management, service provision, etc.

The virtualized RAN 1000 according to an embodiment of the present disclosure may include an electronic device 100, a CU 120, a plurality of DUs 200, ..., 300, a plurality of RUs 131, ..., 133, ..., 135, ..., 137, and a plurality of cells 141, ..., 143, ..., 145, ..., 147. In the present disclosure, for convenience of description, the number of DUs, RUs, and cells is described as being constant, but is not limited thereto. For example, the number of RUs connected to a first DU 200 and the number of RUs connected to an N^{th} DU 300 may be different from each other, and the number of cells connected to a first RU 131 and the number of cells connected to an M^{th} RU 137 may be different from each other.

The electronic device 100 according to an embodiment may be connected to each unit including a CU and RU of the virtualized RAN 1000 and may control an operation of each unit. For example, the electronic device 100 may control the first DU 200 to change a media access control (MAC) address of the first DU 200, or may control the first DU 200 to transmit data to at least one RU from among the plurality of RUs 131, ..., 133, ..., 135, ..., 137 or not to transmit data.

The electronic device 100 according to an embodiment may include operations, administration, and maintenance (OAM). OAM may indicate a set of functions and protocols which support network operations, management, and maintenance. OAM does not directly correspond to a specific network element and may include a concept including a function required for operations and management of an entire network. Accordingly, the electronic device 100 may be implemented as a single specific device, but may also be implemented in combination with at least one unit from among the CU 120, the plurality of DUs 200, ..., 300, and the RUs 131, ..., 137 within the virtualized RAN 1000. In addition, the electronic device 100 according to an embodiment may be implemented as a program or module written in software of the virtualized RAN 1000.

The CU 120 according to an embodiment may perform control and management of the virtualized RAN 1000. For example, the CU 120 may manage status monitoring, resource allocation, scheduling, user management, etc. of the virtualized RAN 1000.

The plurality of DUs 200, ..., 300 according to an embodiment may perform a role of distributing functions of a radio base station and performing data processing. For example, the plurality of DUs 200, ..., 300 may perform functions of radio resource management, user authentication, data transmission, etc.

The plurality of RUs 131, ..., 137 according to an embodiment is a radio unit which may transmit and receive radio signals from a radio base station, and may communicate with a user terminal device by taking charge of radio frequency and wireless transmission.

The plurality of cells 141, ..., 147 according to an embodiment may indicate an area representing a range covered by a single radio base station for traffic. Each of the plurality of cells 141, ..., 147 may perform a role of performing communication between a user terminal and a radio base station.

In the present disclosure, the terms "cell" and "cell site" may be used interchangeably or as substitutes for each other.

In general, a DU and a cell may be connected 1:1 so that the DU may process traffic generated in the cell. However, in the virtualized plurality of DUs 200, ..., 300 according to an embodiment, a plurality of cells may be connected to one DU. For example, the plurality of cells 141, ..., 143 may be connected to the first DU 200 so that traffic of the plurality of cells 141, ..., 143 may be processed.

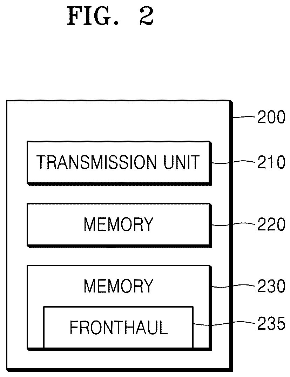

FIG. 2 illustrates a DU according to an embodiment of the present disclosure.

Referring to FIG. 2, the first DU 200 according to an embodiment may include a radio link control (RLC) layer 210, a MAC layer 220, and a physical (PHY) layer 230. In the embodiment of FIG. 2, the first DU 200 is described as including the RLC layer 210, the MAC layer 220, and the PHY layer 230. However, layers included in the first DU 200 are not limited thereto. For example, the DU 200 may further include a packet data convergence protocol (PDCP) layer.

The first DU 200 according to an embodiment may perform various RAN functions for processing signals by the RLC layer 210, the MAC layer 220, and the PHY layer 230.

In addition, a plurality of DUs including the N^{th} DU 300 of FIG. 1 may include a layer having the same configuration as the first DU 200.

The RLC layer 210 according to an embodiment may include at least some of the functions as follows.
Transfer of upper layer protocol data units (PDUs)
In-sequence delivery of upper layer PDUs
Out-of-sequence delivery of upper layer PDUs
Error correction through automatic repeat request (ARQ)
Concatenation, segmentation and reassembly of RLC service data unit (SDU)
Re-segmentation of RLC data
Reordering of RLC data
Duplicate detection
Protocol error detection
RLC SDU discard
RLC re-establishment

The in-sequence delivery function of the RLC layer 210 indicates a function of sequentially delivering RLC SDUs received from a lower layer to an upper layer, and may include a function of, when one RLC SDU is received divided into a plurality of RLC SDUs, reassembling and delivering the RLC SDUs.

In addition, the in-sequence delivery function may include at least one of a function of reordering the received RLC PDUs based on an RLC sequence number (SN) or a PDCP SN, a function of recording lost RLC PDUs by reordering the order, and a function of reporting a status of the lost RLC PDUs to the transmission side.

In addition, the in-sequence delivery function may include a function of requesting retransmission of the lost RLC PDUs, and, when the lost RLC SDU is present, a function of sequentially delivering only the RLC SDUs up to the lost RLC SDU to the upper layer.

In addition, the in-sequence delivery function may include, when there is a lost RLC SDU and a predetermined timer has expired, a function of sequentially delivering, to the upper layer, all RLC SDUs received before the timer starts, or when a certain timer has expired even though there is a lost RLC SDU, a function of sequentially delivering all RLC SDUs received up to the present to the upper layer.

The RLC layer 210 according to an embodiment may sequentially process the RLC PDUs in the order in which they are received, regardless of the sequence order, and deliver same to the PDCP layer. When a segment is received, the RLC layer 210 may combine the received segment with a segment stored in a buffer or segments to be received later, reconstruct the received segment into a complete RLC PDU, and then deliver the RLC PDU to the PDCP layer. Meanwhile, in new radio (NR), the RLC layer 210 may not include a concatenation function, and the concatenation function may be performed in the MAC layer 220 or replaced with a multiplexing function of the MAC layer 220.

Functions of the MAC layer 220 according to an embodiment may include at least some of the functions as follows.
Mapping between logical channels and transport channels
Multiplexing/demultiplexing of MAC SDUs
Scheduling information reporting
Error correction through Hybrid Automatic Repeat Request (HARQ)
Priority handling between logical channels of one UE
Priority handling between UEs by means of dynamic scheduling
Multimedia Broadcast Multicast Service (MBMS) service identification
Transport format selection
Padding
The PHY layer 230 according to an embodiment may perform at least some of the functions as follows.
Data transmission and reception using electrical signals
Channel coding/decoding function
Modulation/demodulation function
Power control
Cell search

The PHY layer 230 may perform channel coding and modulation on data of the upper layer, converts the data into an Orthogonal Frequency-Division Multiplexing (OFDM) symbol, and then transmit the OFDM symbol through a radio channel. In addition, the PHY layer 230 may perform demodulation and channel decoding on the OFDM symbol received through the radio channel, and deliver data thus obtained to the upper layer.

The functions of the PHY layer 230 described above may be divided into a high PHY layer and a lower PHY layer and performed in each layer. The PHY layer 230 according to an embodiment may indicate a high-PHY layer. The high PHY layer may manage the high PHY layer between a radio base station and a terminal device and perform data processing, modem control, frequency spectrum management, etc. In this case, the low-PHY layer may be present in the RUs 131, ..., 137, and the functions of the PHY layer 230 may be divided and performed.

The PHY layer 230 according to an embodiment may include fronthaul 235. The fronthaul 235 according to an embodiment may be responsible for connection between the first DU 200 and at least one RU of the first DU 200 and may transmit or receive data under the control by the electronic device 100. In addition, the plurality of RUs 131, ..., 137 of FIG. 1 according to an embodiment may include fronthaul for connecting to the fronthaul 235 of the first DU 200 in the low-PHY layer.

The fronthaul 235 according to an embodiment may include a number of fronthaul interfaces equal to the number of cells which the first DU may process. For example, when the number of cells which the first DU 200 may process is 5, five fronthaul interfaces of the fronthaul 235 may also be generated.

Here, the "fronthaul interface" may include a virtualized access interface for data transmission or reception between a DU and an RU or between a DU and a cell.

The fronthaul interface of the fronthaul 235 and the fronthaul of the RU, according to an embodiment, may include a fronthaul processing module following an Open-RAN (ORAN) specification and may be connected to each other through a network interface card (NIC) or a virtual-NIC, respectively.

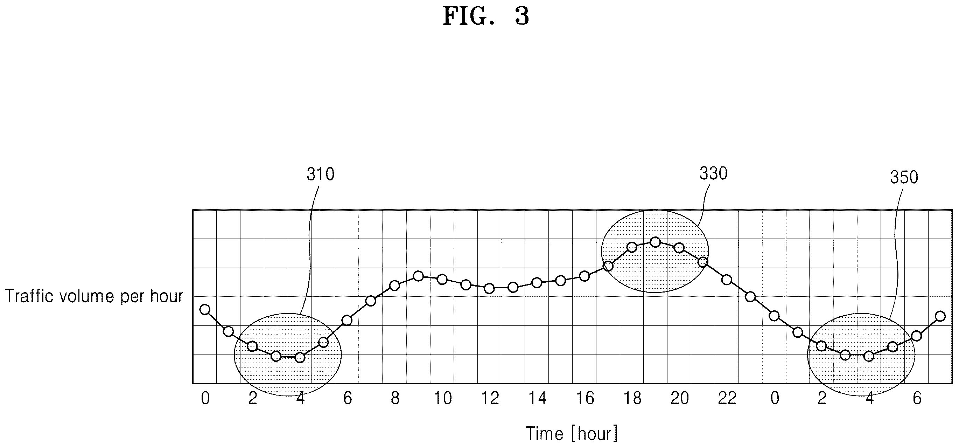

FIG. 3 illustrates a traffic volume over time according to an embodiment of the present disclosure. In FIG. 3, the x-axis indicates time (hour) and the y-axis indicates a relative traffic volume per hour.

Referring to FIG. 3, it may be seen that the traffic volume over time changes over time. During a first day's early morning time slot 310 from 2:00 to 5:00 a.m., when traffic volume is relatively low, the virtualized RAN 1000 may reduce the number of processing pods which process traffic because the traffic volume is lower than in other time slots.

Here, the "processing pod" may indicate a unit for virtualizing and processing functions related to physical radio resources. The processing pod may be implemented by clustering together a series of servers, hardware accelerators, and network connections, etc. to perform functions which require processing power. In the present disclosure, the processing pod may indicate a DU or RU for data processing.

Scale-in according to an embodiment may indicate a process of performing cell migration while reducing the number of processing pods handling traffic. However, the term representing the operation of reducing the number of processing pods handling traffic is not limited to "scale-in" and various terms may be used to refer to the process described above.

During the first day's afternoon time slot 330 from 3:00 to 9:00 P.M., when traffic volume is relatively high, it may be difficult to process the traffic generated in the cell by using only the previously operated processing pods because the traffic volume is large compared to the other time slots. Therefore, in the afternoon time zone 330, the virtualized RAN 1000 may increase the number of previously operated processing pods or determine a processing pod with relatively low throughput, so that the added or determined processing pod may distribute and process the generated traffic.

Scale-out according to an embodiment may indicate an operation of increasing the number of processing pods handling traffic, and then migrating data to the additional pods or migrating data to processing pods with relatively low throughput. However, the term "scale-out" is not limited to the cell migration operation that increases the number of processing pods handling traffic and migrates data to the added pods or migrates data to processing pods with relatively low throughput, and various terms may be used to refer to the process described above.

In addition, during the second day's early morning time slot 350 from 2:00 to 5:00 AM, when traffic volume is relatively low, the virtualized RAN 1000 may perform scale-in to reduce the number of processing pods that handle traffic because the traffic volume is lower than the other time slots.

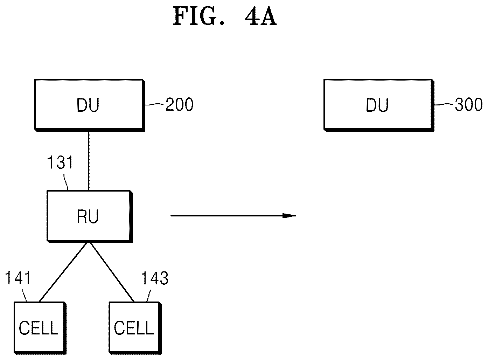

FIG. 4A illustrates a scale-out situation according to an embodiment of the present disclosure.

Referring to FIG. 4A, it can be shown that the electronic device 100 according to an embodiment determines a scale-out situation, and the first DU 200, the second DU 300, and the second cell 143 are determined or identified as scale-out targets.

Before the scale-in operation is performed, the first RU 131 according to an embodiment may be connected to the first cell 141 and the second cell 143 and may transmit and receive data to and from the first DU 200, and traffic generated in the first cell 141 and the second cell 143 may be processed by the first DU 200.

For example, in the case where the traffic volume of the first cell 141 and the second cell 143 to be processed by the first DU 200, which is a processing pod, increases, such as in the afternoon time zone 330 of FIG. 3, the electronic device 100 may receive information of the first DU 200 and determine or identify a scale-out situation. In addition, the electronic device 100 may identify the second cell 143 as a cell to be scaled out or migrated. In addition, the electronic device 100 may determine the second DU 300 as a DU to which the cell will be migrated, so as to distribute and process traffic generated in the second cell 143.

Here, the second DU 300 according to an embodiment does not indicate a DU physically divided into vDUs, but may indicate a DU newly partitioned from the entire vDU pool as a virtualized DU. In an embodiment, the second DU 300 may indicate a vDU which handles a relatively little traffic.

In order for a scale-in operation according to an embodiment to be performed, information such as cell migration information of the second cell 143, the first DU 200, and the second DU 300 may be shared with each configuration by the electronic device 100 to enable data transmission and reception.

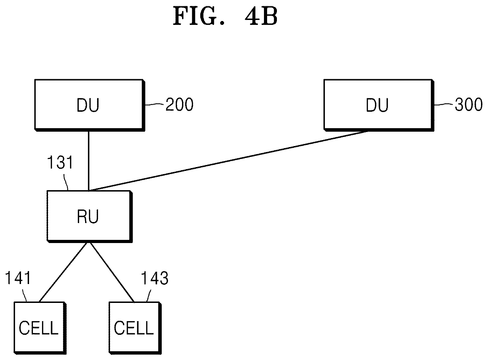

FIG. 4B illustrates a DU, an RU, and a cell, on which scale-out according to an embodiment of the present disclosure has been performed.

Referring to FIG. 4B, after the scale-out operation is terminated, the first DU 200 may process traffic of the first cell 141 connected to the first RU 131, and the second DU 300 may process traffic of the second cell 143 connected to the second RU 131. However, FIG. 4B is only an example, and connection between each component may be expressed differently. For example, the first DU 200 may be connected to the first RU 131 and may handle traffic for the first cell 141, and the second DU 300 may be connected to a new RU other than the first RU 131 and may handle traffic for the second cell 143.

That is, after the scale-out operation is terminated according to an embodiment, the traffic generated in the first cell 141 and the second cell 143 may be processed in a distributed manner because they are processed by different DUs, respectively.

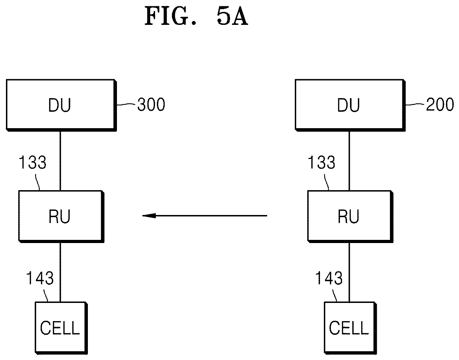

FIG. 5A illustrates a scale-in situation according to an embodiment of the present disclosure.

Referring to FIG. 5A, it can be shown that the electronic device 100 identifies a scale-in situation, and the first DU 200, the second DU 300, and the second cell 143 are identified as scale-in targets.

According to an embodiment, the first RU 131 may be connected to the first cell 141 and may transmit and receive data to and from the first DU 200, and the first DU 200 may process traffic generated from the first cell 141. In addition, the second RU 133 may be connected to the second cell 143 and may transmit and receive data to and from the second DU 300, and the second DU 300 may process traffic generated from the second cell 143.

For example, in the case where the traffic volume of the first cell 141 to be processed by the first DU 200, which is the processing pod, is reduced, such as in the morning time zone 350 of the second day in FIG. 3, the electronic device 100 may receive information related to the throughput of the first DU 200 and the second DU 300 and may identify or determine a scale-in situation. In addition, the electronic device 100 according to an embodiment may identify or determine the first cell 141 to be scaled in or migrated, the first DU 200 which migrates the first cell 141, and the second DU 300 to which the first cell 141 is migrated.

Here, the second DU 300 according to an embodiment may be a DU virtualized as a vDU and may indicate a DU partitioned from the entire vDU pool. In an alternative or additional embodiment, the second DU 300 may indicate a vDU which handles a relatively little traffic.

In order for a scale-in process according to an embodiment to be performed, information such as cell migration information of the second cell 143, the first DU 200, and the second DU 300 may be shared with each configuration by the electronic device 100 to enable data transmission and reception.

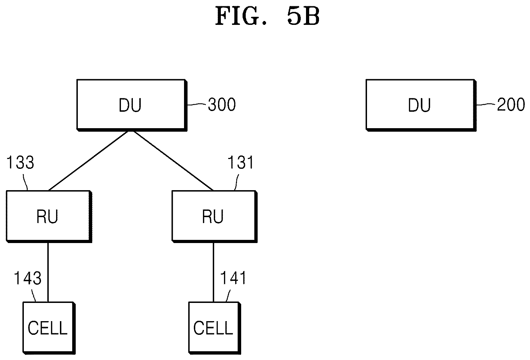

FIG. 5B illustrates a DU, an RU, and a cell, on which scale-in according to an embodiment of the present disclosure has been performed.

Referring to FIG. 5B, after the scale-in process is completed, the second DU 300 according to an embodiment may process traffic of the second cell 143 connected to the second RU 133 and the first cell 141 connected to the first RU 131. When the scale-in operation is terminated, the electronic device 100 according to an embodiment may reduce power consumption by powering off the second DU 200 that is not processing traffic.

In a scale situation involving scale-in or scale-out, the electronic device 100 according to an embodiment may enable a fronthaul splitter to support connections between a plurality of DUs and cells. In this case, the fronthaul splitter may end up transmitting the same data to two DUs that are to be scaled in or out. Therefore, additional computation may be required because the fronthaul path requires high-speed switching and data transmitted from two DUs must be merged.

The electronic device 100 according to an embodiment of the present disclosure may achieve various effects, including the effect of resolving problems of unnecessary computation and increased packet volume by scaling DUs in or out on a cell basis.

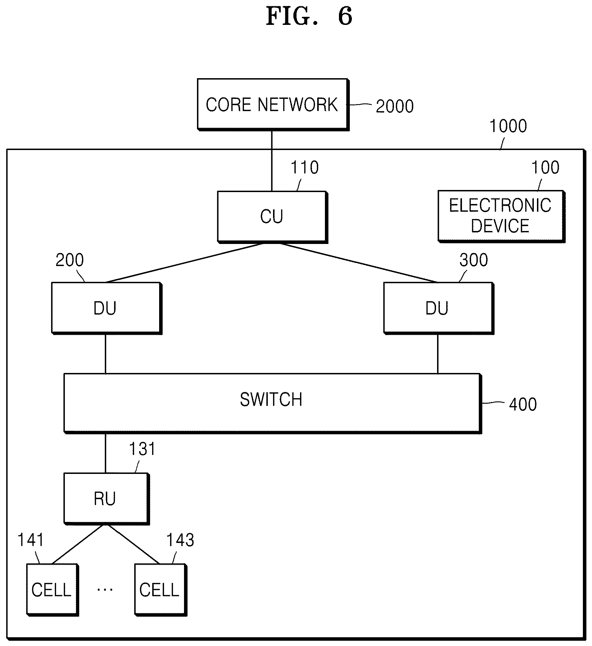

FIG. 6 illustrates a v-RAN and a core network, according to an embodiment of the present disclosure.

Referring to FIG. 6, the virtualized RAN 1000 according to an embodiment may be connected to the core network 2000 and may include the electronic device 100, a CU 110, the first RU 131, the plurality of cells 141, ..., 143, the first DU 200, the second DU 300, and a switch 400. However, FIG. 6 is only an example drawing and may include additional configurations or may not include all configurations. For example, unlike in FIG. 6, the virtualized RAN 1000 may include additional DUs other than the first DU 200 and the second DU 300, and may include fewer cells than the plurality of cells 141, ...143, 145, ..., 147.

The switch 400 according to an embodiment may be located between two DUs and one RU for connection.

The configurations and functions of the core network 2000, CU 110, the first DU 200, the second DU 300, the first RU 131 and the plurality of cells 141, ..., 143 according to an embodiment of FIG. 6 are the same as those described above with reference to FIGS. 1 and 2.

The electronic device 100 according to an embodiment may be connected to the CU 110, the first DU 200, the second DU 300, the first RU 131, and the switch 400 to control the operation of each component. For example, the electronic device 100 may obtain key performance indicator (KPI) information of the first DU 200 and KPI information of the second DU 300 from the first DU 200 and the second DU 300.

The KPI information obtained by the electronic device 100 according to an embodiment may include at least one of central processing unit (CPU) usage information, memory usage information, and network throughput information. The electronic device 100 according to an embodiment may determine a scale-in or scale-out situation and determine a DU to be scaled, according to a predetermined scaling situation determination policy based on the obtained KPI information of the first DU 200 and second DU 300.

In the present disclosure, the DU to be scaled indicates scaling in or out from the first DU 200 to the second DU 300. For example, when the data throughput of the first DU 200 is a certain standard or higher and the cell is migrated to the second DU 300, the DU migrating the cell may be the first DU 200, and the DU to which the cell is migrated may be the second DU 300.

In addition, the electronic device 100 according to an embodiment may perform cell migration according to a scaling situation by transmitting a message or data to the CU 110, the first DU 200, the second DU 300, the first RU 131, and the switch 400.

The switch 400 according to an embodiment may be positioned between a plurality of RUs 131 and 133 and the plurality of DUs 200 and 300 in the virtualized RAN 1000, and may connect the plurality of DUs 200 and 300 and the plurality of cells 141, ..., 143, 145, ..., 147 by using a MAC address table. Here, each cell according to an embodiment may be connected to only one DU by the switch 400 regardless of the connected RU.

For example, the first cell 141 and the second cell 143 may be connected to the first DU 200 by the switch 400, or the first cell 141 may be connected to the first DU 200 by the switch 400 and the second cell 143 may be connected to the second DU 300. In this case, the switch 400 according to an embodiment may store a MAC address table for connecting each cell and each DU. In addition, when the connection of each cell and each DU is changed according to the scaling situation, the switch 400 according to an embodiment may update the MAC address table according to the changed connection.

The following describes a method by which the electronic device 100 according to an embodiment performs scale-in or scale-out by changing MAC addresses between the first DU 200 and the second DU 300 by using the switch 400.

The first DU 200 and the second DU 300 according to an embodiment may include fronthaul, and the first DU 200 and the second DU 300 may generate and initialize a number of fronthaul interfaces equal to the maximum number of cells that each DU may process in the fronthaul. For example, the fronthaul interfaces generated by the first DU 200 and the second DU 300 may be generated by using an NIC or a vNIC (e.g., vlans, Virtual Function (VF)).

According to an embodiment, the first RU 131 may obtain and store a MAC address of a destination DU of each cell by using the fronthaul management plane (M-Plane). Here, the MAC address of the destination DU of each cell may be set so as not to overlap a MAC address of another DU, and thus, each cell may be associated with only one DU.

The electronic device 100 according to an embodiment may transmit fronthaul path switching information to the first DU 200 and the second DU 300 when the scaling situation and DU to be scaled are determined to be the first DU 200 and the second DU 300. The first DU 200 and the second DU 300 according to an embodiment may perform scaling using the fronthaul path switching information.

The fronthaul path switching information according to an embodiment may include at least one of information about a cell to be scaled, a MAC address of a fronthaul interface corresponding to the cell, a switching time, and a data block time.

The information about a cell to be scaled, according to an embodiment, may indicate information about a target cell whose MAC address is to be modified in the DU.

The MAC address of the fronthaul of a DU to be scaled according to an embodiment may be used in fronthaul corresponding to the target cell in the DU (e.g., the first DU 200) that migrates the cell before performing scale-in or scale-out. In addition, the MAC address of the fronthaul interface of the DU to which the cell is migrated, according to an embodiment, may be used on the fronthaul interface corresponding to the target cell in the DU to which the cell is migrated (e.g., the second DU 300), after scale-in or scale-out is performed.

The electronic device 100 according to an embodiment may indicate the first DU 200 and the second DU 300 to perform a cell migration operation at the fronthaul path switching time, i.e., a specific time T. The electronic device 100 simultaneously changes each of the MAC addresses on the fronthaul interfaces of the first DU 200 and the second DU 300, and the first DU 200 and the second DU 300 may synchronize times so that traffic of cells to which the respective DUs are connected may be smoothly processed even after scaling. Here, the specific time T according to an embodiment may be a global positioning system (GPS) time as a predetermined absolute time.

The switching time according to an embodiment may be utilized when fronthaul path switching is performed together with other modules. For example, the switching time may be used when fronthaul path switching is performed along with migration of MAC context.

In addition, the first DU 200 according to an embodiment may receive fronthaul path switching information from the electronic device 100, thereby prevent data transmission occurring in the fronthaul of the first DU 200 from the time T. The electronic device 100 may block data transmission occurring in the fronthaul of the first DU 200 to avoid interfering with the MAC address table updates of the switch 400 connected to the fronthaul.

The first DU 200, which is a DU to which a cell is transferred, according to an embodiment may change the MAC address of the fronthaul interface corresponding to the cell to be scaled to a dummy value based on the received information about the cell to be scaled.

In addition, the second DU 300, which is a DU to which the cell is migrated, according to an embodiment may transmit a dummy packet to the switch 400 or the cell to be migrated. In addition, the second DU 300 according to an embodiment may transmit the dummy packet to the switch 400, thereby ensuring a time required to update the MAC address table of the switch 400.

The updating of the MAC address table of the switch 400 may indicate a process by which the switch 400 changes a port from the first DU 200 to the second DU 300. Here, the time required to update the MAC address table typically takes several tens of ms, but depending on the implementation example of the switch 400, the time may vary.

Therefore, because data transmitted from the first RU 131 may not be delivered to the second DU 300 for the amount of time required to update the MAC address table of the switch 400, the second DU 300 according to an embodiment may transmit a dummy packet to the switch 400 so as to reduce data not delivered to the second DU 300.

Here, the switch 400 according to an embodiment may set the MAC address to a source MAC address of an ethernet header by using the transmitted dummy packet. In addition, the second DU 300 according to an embodiment may select fronthaul to exclusively process a cell to be scaled, and change the MAC address of the fronthaul to the received MAC address.

Below, a method is described in which the electronic device 100 according to an embodiment changes configuration information of the first RU 131 and performs scale-in or scale-out between the first DU 200 and the second DU 300.

The electronic device 100 according to an embodiment may change the configuration information of the first RU 131 and connect the plurality of cells 141, ..., 143 connected to the RU 131 to the first DU 200 or the second DU 300. In this case, the virtualized RAN 1000 according to an embodiment may not have the switch 400, and the first RU 131 may be directly connected to the first DU 200 or the second DU 300 through the configuration information of the first RU 131 so that traffic of the plurality of cells 141, ..., 143 each connected to the first DU 200 or the second DU 300 may be processed.

Here, the configuration information of the first RU 131 according to an embodiment may indicate information of the plurality of cells 141, ..., 143 connected to the first RU 131.

The first RU 131 according to an embodiment may be initialized. The initialization operation according to an embodiment may indicate an operation in which the first RU 131 obtains a MAC address of the first DU 200, which is a destination DU, by using an M-plane of the fronthaul of the first RU 131, and the plurality of cells 141, ..., 143 connected to the first RU 131 store the MAC address of the first DU 200. However, the initialization operation is not limited thereto. For example, the first cell 141 may store the MAC address of the first DU 200 by using the first DU 200 as the destination DU, and the M^{th} cell 143 may store the MAC address of the second DU 300 by using the second DU 300 as the destination DU.

When the DU to be scaled is determined as the first DU 200 and the second DU 300, and the cell to be migrated is determined as the M^{th} cell 143, the electronic device 100 according to an embodiment may deliver fronthaul path switching information to the first DU 200, and the first DU 200 may deliver the fronthaul path switching information to the first RU 131including the M^{th} cell 143. Alternatively, the electronic device 100 according to an embodiment deliver the fronthaul path switching information to the first DU 200 or the first RU 131.

The first RU 131 according to an embodiment may perform a scale-in or scale-out operation according to a scaling situation determined by the electronic device 100, by using the fronthaul path switching information.

The fronthaul path switching information according to an embodiment may include at least one of information of the M^{th} cell 143, which is the target to which the cell is migrated, the MAC address of the fronthaul of the second DU 300, and a switching time.

For example, the switching time may include an absolute time (e.g., GPS time) at which the first RU 131 changes RU configuration.

According to an embodiment, when the switching time T obtained from the electronic device 100 is reached, the M-Plane of the first RU 131 may change the MAC address of the fronthaul interface of the destination DU of the M^{th} cell 143 to the MAC address of the fronthaul interface of the second DU 300 to which the cell is migrated.

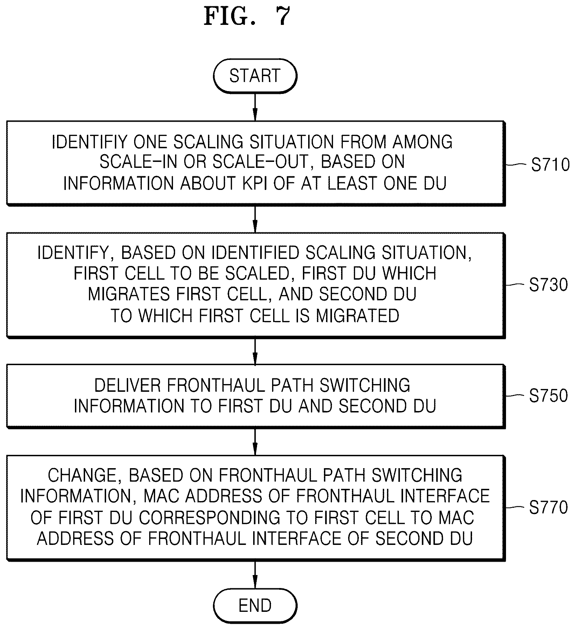

FIG. 7 illustrates a flowchart of migrating a cell by modifying a MAC address of a fronthaul interface of a DU, according to an embodiment of the present disclosure.

Referring to FIG. 7, the virtualized RAN 1000 according to an embodiment may identify a scale situation, which is one of scale-in or scale-out, based on KPI information of at least one DU.

Here, the KPI information of the at least one DU according to an embodiment may include at least one information from among CPU usage information, memory usage information, and a network throughput information. However, the KPI information of the at least one DU is not limited to the examples described above, and may further include information related to traffic handling of the at least one DU. For example, the KPI information of the at least one DU may further include information about the number of cells connected to the DU.

Scale-in according to an embodiment may indicate a process of performing cell migration while reducing the number of processing pods handling traffic. However, the term representing a process of reducing the number of processing pods handling traffic is not limited to "scale-in" and various terms may be used to refer to the process described above.

Scale-out according to an embodiment may indicate a process of increasing the number of processing pods handling traffic, and then migrating data to the additional pods or migrating data to processing pods with relatively low throughput. However, the term "scale-out" is not limited to the cell migration process that increases the number of processing pods handling traffic and migrates data to the added pods or migrates data to processing pods with relatively low throughput, and various terms may be used to refer to the process described above.

The virtualized RAN 1000 according to an embodiment may identify a first cell to be scaled, the first DU 200 which migrates the first cell, and the second DU 300 to which the first cell is to be migrated, based on the identified scaling situation (S730).

In addition, the virtualized RAN 1000 according to an embodiment may identify a scale-out situation when the KPI of the at least one DU is a certain first value or greater, and when the scaling situation is identified as scale-out, may identify a DU having the KPI greater than or equal to the certain first value or greater from among the at least one DU as the first DU 200, and identify one cell from among the cells connected to the first DU 200 as the cell to be migrated.

In addition, the virtualized RAN 1000 according to an embodiment may identify a scale-in situation when the KPI of at least one DU is less than the certain first value, and when the scaling situation is determined as scale-in, may identify a DU having KPI less than the certain first value from among the at least one DU as the first DU 200, and identify one cell from among the cells connected to the first DU 200 as a cell to be migrated.

The virtualized RAN 1000 according to an embodiment may include at least one cell, and the at least one cell may be connected with a fronthaul interface of at least one DU in a one-to-one (1:1) manner. In this case, the at least one DU may generate a number of fronthaul interfaces equal to the number of cells that may be processed using a NIC or a vNIC, and the at least one cell may be mapped and connected one by one to the generated fronthaul interface. Accordingly, a plurality of cells may each be connected one-to-one with one DU.

The virtualized RAN 1000 according to an embodiment may deliver fronthaul path switching information to the first DU 200 and the second DU 300 (S750).

Here, the fronthaul path switching information according to an embodiment may include at least one of information about a cell to be migrated, information about a MAC address of a fronthaul interface corresponding to the cell to be migrated, switching time information, and data block time information.

The virtualized RAN 1000 according to an embodiment may change the fronthaul MAC address of the first DU 200 corresponding to the first cell and the fronthaul MAC address of the second DU 300 based on the front path switching information (S770).

The information about the cell to be scaled, according to an embodiment, may indicate information about a target cell whose MAC address is to be modified in the DU.

The MAC address of the fronthaul of a DU to be scaled according to an embodiment may be used in fronthaul corresponding to the target cell in the DU that migrates the cell before performing scale-in or scale-out. In addition, the MAC address of the fronthaul interface of the DU to be scaled, according to an embodiment, may be used on the fronthaul interface corresponding to the target cell in the DU to which the cell is to be migrated, after scale-in or scale-out is performed.

The electronic device 100 according to an embodiment may indicate the first DU 200 and the second DU 300 to perform a cell migration operation at the fronthaul path switching time, i.e., the specific time T. The electronic device 100 may simultaneously change each of the MAC addresses of the first DU 200 and the second DU 300, and traffic handling of cells connected to the first DU 200 and the second DU 300 may be smoothly performed. The specific time T may be a GPS time as a predetermined absolute time.

In the virtualized RAN 1000 according to an embodiment, after the switching time, the second DU 300 may select a migration fronthaul interface corresponding to a cell to be migrated, and change a MAC address of the selected fronthaul interface to a MAC address of a fronthaul interface of the cell to be migrated. In addition, after the switching time, the first DU 200 may change the MAC address of the fronthaul interface of the first DU 200 to a dummy value.

The virtualized RAN 1000 according to an embodiment may, at the switching time, block data transmission between the first DU 200 and the cell to be migrated, and generate a dummy packet including a fronthaul MAC address corresponding to the cell to be migrated and transmit the dummy packet to the cell to be migrated or the switch 400.

In addition, after a data block time from the switching time T, the virtualized RAN 1000 according to an embodiment may change the MAC addresses in the fronthaul interfaces of the first DU 200 and the second DU 300.

In a method of scaling the MAC address of the fronthaul interface of the DU, according to an embodiment, may perform scaling between the cell and the DU without modifying the ORAN specifications, and thus there is an effect of reducing costs and enabling the use of the existing system as is.

In addition, the method of scaling the MAC address of the fronthaul interface of the DU, according to an embodiment, may have various effects, including an effect of reducing the overall scaling time due to the MAC address update of the switch by generating a dummy packet and transmitting the dummy packet to the switch 400.

In addition, the method of scaling the MAC address of the fronthaul interface of the DU, according to an embodiment, may have various effects, including an effect of enabling scaling on a cell basis by using n:1 mapping between the fronthaul interface of the DU and the cell.

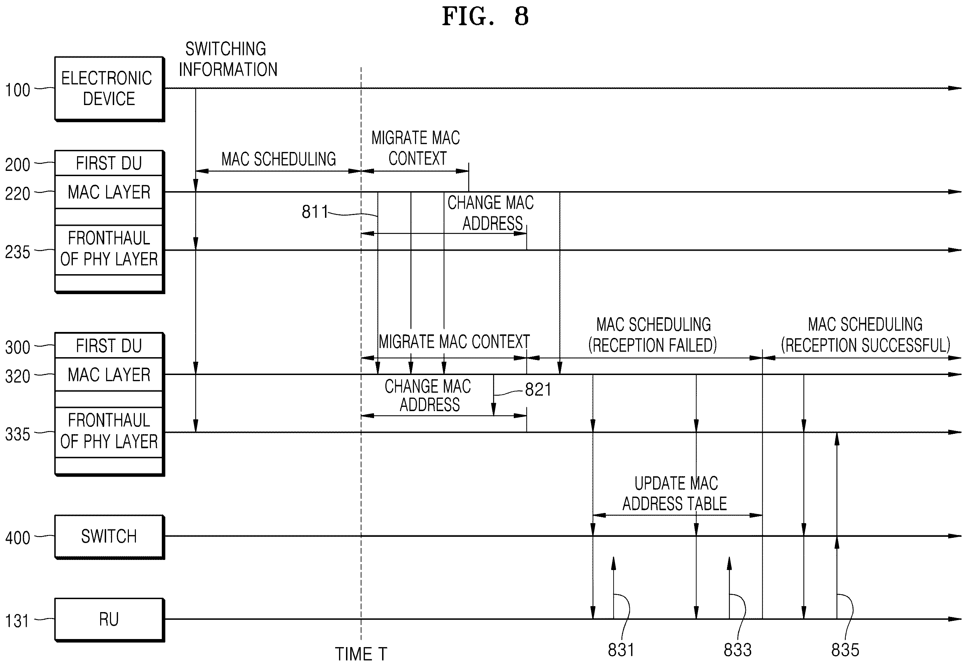

FIG. 8 illustrates the impact of a MAC address table update time of a switch on a fronthaul.

Referring to FIG. 8, the electronic device 100 may transmit the fronthaul path switching information to the MAC layer 220 of the first DU 200, the fronthaul 235 of the PHY layer of the first DU 200, a MAC address 320 of the second DU 300, and fronthaul 335 of the PHY layer of the first DU 300.

When the time T is reached, the MAC layer 220 of the first DU 200 the fronthaul 235 of the PHY layer of the first DU 200, the MAC layer 320 of the second DU 300, and the fronthaul 335 of the PHY layer of the first DU 300 may migrate MAC context and change the MAC address. The MAC context migration may be performed by receiving, by the MAC layer 320 of the second DU 300, MAC context information 811 from the MAC layer 220.

Here, the MAC context may indicate an element or information used in the process of transmitting and receiving data in MAC. For example, the MAC context may indicate scheduling information of user equipment (UE).

When the change of MAC address ends earlier than the MAC context migration, the MAC address 320 of the second DU 300 transmits data 821 to a fronthaul 325 of the PHY layer of the second DU 300, but because the change of MAC address of the fronthaul 325 of the PHY layer of the second DU 300 is not completed, the fronthaul 325 of the PHY layer of the second DU 300 may lose data transmitted by the MAC address 320 of the second DU 300.

In addition, even after the MAC address change is completed, data may be transmitted from the MAC address 320 of the second DU 300 to the fronthaul 325 of the PHY layer of the second DU 300, data may be transmitted from the PHY layer fronthaul 325 of the second DU 300 to the switch 400, and the transmitted data may be transmitted again to the first RU 131. When the data is transmitted from the PHY layer fronthaul 325 of the second DU 300 to the switch 400, the MAC address table update may start, and in this case, the first RU 131 may transmit first uplink data 831 to the switch 400 from the cell connected to the first RU 131. In this case, the data transmitted from the first RU 131 may be lost without being delivered to the second DU 300 because the MAC address table update of the switch 400 has not been completed.

Similarly, when the update of the MAC address table of the switch 400 is not completed, second uplink data 833 transmitted by the first RU 131 may be lost without being delivered to the second DU 300.

After the update of the MAC address table of the switch 400 is completed, third uplink data 835 transmitted by the first RU 131 may be normally delivered to the MAC layer 320 of the second DU 300 through the switch 400 and the fronthaul 335 of the second DU 300.

Because of the time it takes to update the MAC address table of the switch 400 and the time it takes to change the MAC address, it takes a significant amount of time to complete scale-in or scale-out and there is a large amount of data loss in transmission.

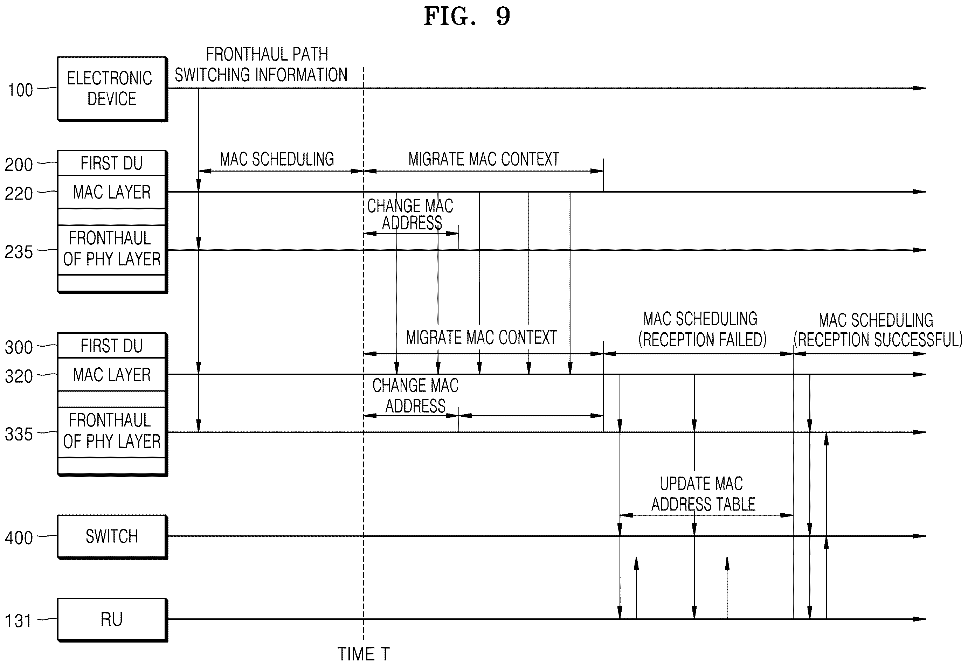

FIG. 9 illustrates the impact of scaling time of other modules on fronthaul.

Referring to FIG. 9, when scale-in or scale-out related operations are started simultaneously with other modules, the start time of the MAC address table update of the switch 400 may be pushed back further depending on the time taken by other modules.

As shown in FIG. 8, the electronic device 100 may transmit a message indicating that cell migration begins at the specific time T and fronthaul path switching information to the MAC layer 220 of the first DU 200, PHY layer fronthaul 235 of the first DU 200, the MAC address 320 of the second DU 300, and PHY layer fronthaul 335 of the first DU 300.

When the time T is reached, the MAC layer 220 of the first DU 200 the fronthaul 235 of the PHY layer of the first DU 200, the MAC layer 320 of the second DU 300, and the fronthaul 335 of the PHY layer of the first DU 300 may migrate MAC context and change the MAC address. The MAC context migration may be performed by receiving, by the MAC layer 320 of the second DU 300, MAC context information from the MAC layer 220.

When scale-in or scale-out related operations are initiated simultaneously with other modules, and the time taken for context migration is longer than the time taken for MAC address change, the time to start updating the MAC address table of the switch 400 may be delayed compared to FIG. 8, and the overall scaling completion time may be delayed further.

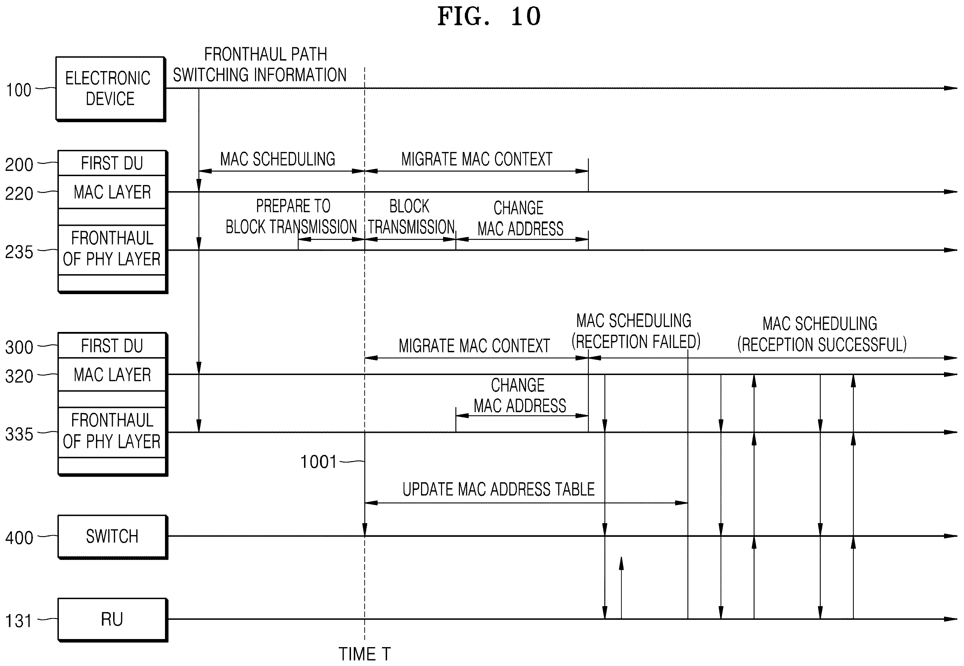

FIG. 10 illustrates the impact of using a dummy packet on fronthaul, according to an embodiment of the present disclosure.

Referring to FIG. 10, the electronic device 100 according to an embodiment may transmit a message indicating that cell migration begins at the specific time T and the fronthaul path switching information to the MAC layer 220 of the first DU 200, the PHY layer fronthaul 235 of the first DU 200, the MAC address 320 of the second DU 300, and the PHY layer fronthaul 335 of the first DU 300.

According to an embodiment, the PHY layer fronthaul 235 of the first DU 200 may prepare to block transmission before the time T, and the PHY layer fronthaul 235 of the first DU 200 may block transmission and reception of data when the time T is reached. From this point on, the first DU 200 may not affect the switch 400.

According to an embodiment, when the time T is reached, the second DU 300 may generate a dummy packet 1001 including changed MAC information and transmits the dummy packet 1001 to the switch 400. A source MAC address of the dummy packet may be the MAC address included in the fronthaul path switching information. Therefore, the switch 400 may start updating the MAC address table more quickly by using the dummy packet.

Accordingly, the virtualized RAN 1000 according to an embodiment may perform scale-in or scale-out more quickly.

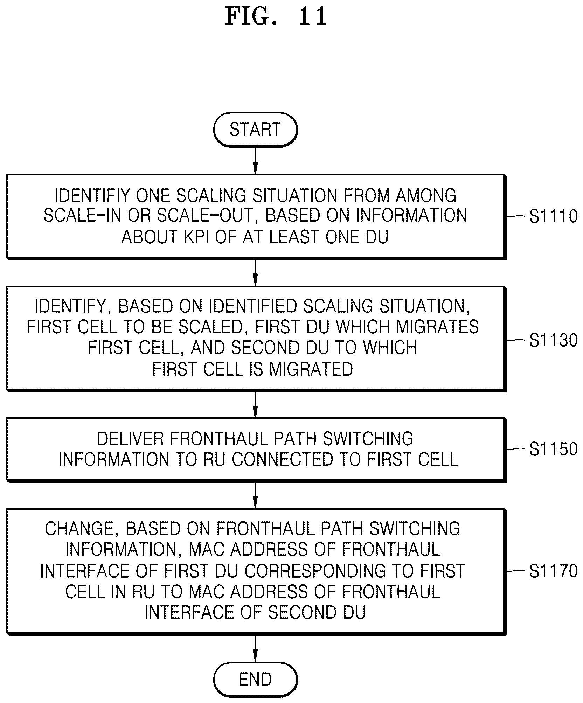

FIG. 11 is a flowchart illustrating scaling by modifying RU configuration information, according to an embodiment.

Referring to FIG. 11, the virtualized RAN 1000 may identify a scaling situation, which is one of scale-in or scale-out, based on KPI information of at least one DU (S1110).

Here, the KPI information of the at least one DU according to an embodiment may include at least one information from among CPU usage information, memory usage information, and a network throughput information. However, the KPI information of the at least one DU is not limited to the examples described above, and may further include information related to traffic handling of the at least one DU. For example, the KPI information of the at least one DU may further include information about the number of cells connected to the DU.

Scale-in according to an embodiment may indicate a process of performing cell migration while reducing the number of processing pods handling traffic. However, the term representing a process of reducing the number of processing pods handling traffic is not limited to "scale-in" and various terms may be used to refer to the process described above.

Scale-out according to an embodiment may indicate a process of increasing the number of processing pods handling traffic, and then migrating data to the additional pods or migrating data to processing pods with relatively low throughput. However, the term "scale-out" is not limited to the cell migration process that increases the number of processing pods handling traffic and migrates data to the added pods or migrates data to processing pods with relatively low throughput, and various terms may be used to refer to the process described above.

The virtualized RAN 1000 according to an embodiment may identify a first cell to be scaled, the first DU 200 which migrates the first cell, and the second DU 300 to which the first cell is migrated, based on the identified scaling situation (S1130).

The virtualized RAN 1000 according to an embodiment may identify a scale-out situation when the KPI of the at least one DU is a certain first value or greater, and when the scaling situation is identified as scale-out, may identify a DU having the KPI greater than or equal to the certain first value or greater from among the at least one DU as the first DU 200, and identify one cell from among the cells connected to the first DU 200 as the cell to be migrated.

The virtualized RAN 1000 according to an embodiment may identify a scale-in situation when the KPI of at least one DU is less than the certain first value, and when the scaling situation is determined as scale-in, may identify a DU having KPI less than the certain first value from among the at least one DU as the first DU 200, and identify one cell from among the cells connected to the first DU 200 as a cell to be migrated.

The virtualized RAN 1000 according to an embodiment may include at least one cell, and the at least one cell may be connected one-to-one with a fronthaul interface of at least one DU. In this case, the at least one DU may generate a number of fronthaul interfaces equal to the number of cells that may be processed using a NIC or a vNIC, and the at least one cell may be mapped and connected one by one to the generated fronthaul interface. Accordingly, a plurality of cells may each be connected one-to-one with a fronthaul interface of one DU.

The virtualized RAN 1000 according to an embodiment may deliver fronthaul path switching information an RU connected to a first cell (S1150).

Here, the RU connected to the first cell may receive data from the first cell and transmit the received data by using the MAC address of the destination DU. Accordingly, the destination DU which received data from the first cell may process the data traffic of the first cell.

The fronthaul path switching information according to an embodiment may include at least one of information of the M^{th} cell 143, which is the target to which the cell is to be migrated, the MAC address of the fronthaul of the second DU 300, and a switching time.

Here, information of M^{th} cell 143 to be scaled, according to an embodiment, may indicate information that can identify the M^{th} cell.

The switching time according to an embodiment may be utilized when fronthaul path switching is performed together with other modules. For example, the switching time may be used when fronthaul path switching is performed along with migration of MAC context.

The virtualized RAN 1000 according to an embodiment may change the fronthaul interface MAC address of the first DU 200 corresponding to the first cell in the RU to the fronthaul interface MAC address of the second DU 300 based on the fronthaul path switching information (S1170).

The M-plane included in the RU, according to an embodiment, may change the destination address of the first cell to be migrated, from the fronthaul interface MAC address of the first DU 200 to the fronthaul interface MAC address of the second DU 300.

A method of performing scaling by changing the configuration information of an RU, according to an embodiment, may have various effects, including the effect of enabling fast path switching because only the destination MAC address information of the cell stored in the RU is modified.

In addition, the method of performing scaling by changing the configuration information of the RU, according to an embodiment, only modifies the destination MAC address information of the cell stored in the RU, and thus, it has a small impact on the existing virtual RAN 1000, and thus may have various effects including the effect of increasing stability.

In addition, the method of performing scaling by changing the configuration information of the RU, according to an embodiment, may have various effects, including the effect of eliminating the influence of delay in request messages, etc. in the RU, because the scaling time is set and path switching is performed.

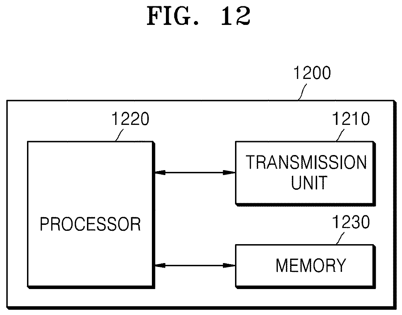

FIG. 12 is a block diagram illustrating a configuration of an electronic device according to an embodiment.

Referring to FIG. 12, an electronic device 1200 according to an embodiment may include a transceiver 1210, a processor 1220, and memory 1230. According to various embodiments, the configuration of the electronic device is not limited to that shown in FIG. 12, and may further include configurations not shown in FIG. 12 or omit some of the configurations shown in FIG. 12.

For example, in FIG. 12, the electronic device 1200 is shown controlling scaling by the operation of the processor 1220, but the operation of the processor 1220 may be implemented and stored as software stored in the memory 1220.

Additionally, although not shown in FIG. 12, the electronic device 1200 may further include an input unit which may receive a threshold KPI value for determining a scaling situation from a user, and an output unit which may output a scaling result.

Additionally, the operations of the processor 1220 may be implemented as software modules stored in the memory 1230. For example, the software module may be stored in the memory 1230 and operated by being executed by the processor 1220.

The transceiver 1210 may support the establishment of a wired or wireless communication channel between the electronic device 1200 and another external electronic device and the performance of communication through the established communication channel. According to an embodiment, the transceiver 1210 may transmit or receive data from a DU, RU, or cell within the virtualized RAN 1000 via wired or wireless communication, or may transmit or receive data to or from an electronic device including a server which controls another external base station.

The data received by the transceiver 1210 according to an embodiment may be a KPI related to at least one DU. Here, the KPI information of the at least one DU may include at least one information from among CPU usage information, memory usage information, and a network throughput information.

According to various embodiments, the transceiver 1210 may include a wireless communication module (e.g., a cellular communication module, a short-range wireless communication module, or a global navigation satellite system (GNSS) communication module) or a wired communication module (e.g., a local area network (LAN) communication module, or a power line communication module), and may use the corresponding communication module to communicate with an external electronic device via a short-range communication network (e.g., Bluetooth, wireless fidelity (WiFi) direct, or infrared data association (IrDA)) or a long-range communication network (e.g., a cellular network, the Internet, or a computer network (e.g., a LAN or a wide area network (WAN)).

Alternatively, depending on various embodiments, the transceiver 1210 may communicate with devices of the virtualized RAN 1000 via a wired connection within the virtualized RAN 1000 or via an internal bus.

The processor 1220 may be electrically connected to components included in the electronic device and may perform operations or data processing related to control and/or communication of the components included in the electronic device. According to an embodiment, the processor 1220 may load commands or data received from at least one of the other components into the memory 1230, process the commands or data, and store the resulting data in the memory 1230.

In addition, in FIG. 12, for convenience of explanation, the processor 1220 is expressed as operating as a single processor 1220, but the functions of at least some of the modules included in each unit conceptually dividing the functions of the electronic device 1200 may be implemented by a plurality of processors. In this case, the processor 1220 may not operate as a single processor 1220, but may be implemented so that the plurality of processors are implemented as separate hardware to perform each operation. The disclosure is not limited thereto.

The processor 1220 is a component which controls a series of processes to operate the electronic device 1200 according to embodiments, and may include one or more processors. One or more processors included in the processor 1220 may be circuitry, such as an SoC, an IC, etc. One or more processors included in the processor 1220 may be a general-purpose processor such as a CPU, a Micro Processor Unit (MPU), an Application Processor (AP), a Digital Signal Processor (DSP), a graphics-only processor such as a graphics processing unit (GPU), a Vision Processing Unit (VPU), an artificial intelligence-only processor such as a Neural Processing Unit (NPU), or a communication-only processor such as a Communication Processor (CP). When one or more processors included in the processor 1220 are Al-dedicated processors, the Al-dedicated processors may be designed with a hardware structure specialized for processing a specific Al model.

The processor 1220 may write data to the memory 1230, read data stored in the memory 1230, and process data according to predefined operation rules or artificial intelligence models, particularly by executing a program or at least one instruction stored in the memory 1230. Accordingly, the processor 1220 may perform the operations described in the following embodiments, and the operations described as being performed by the electronic device 1200 or the detailed components included in the electronic device 1200 in the embodiments may be viewed as being performed by the processor 1220 unless otherwise described.

The memory 1230 may be electrically connected to the processor 1220 and may store instructions or data related to the operation of components included in the electronic device. According to various embodiments, the memory 1230 may store KPI thresholds for determining a scaling situation, information about the DU to which a cell is migrated, or instructions for the operations described above.

According to an embodiment, the memory 1230 may also store programs or instructions for executing software modules when the functionality of electronic device 1200 is implemented as software modules which are conceptually separated and executed by the processor 1220. The memory 1230 may also provide stored data to the processor 1220 upon request by the processor 1220.

A method of controlling distributed unit (DU) scaling in a virtualized radio access network (v-RAN), according to an embodiment, may include identifying a scaling situation from among scale-in or scale-out, based on information about a key performance indicator (KPI) of at least one DU, identifying, based on the identified scaling situation, a first cell to be scaled, a first DU which migrates the first cell, and a second DU to which the first cell is migrated, delivering fronthaul path switching information to the first DU and the second DU, and changing, based on the fronthaul path switching information, a media access control (MAC) address of a fronthaul interface of the first DU corresponding to the first cell and a MAC address of a fronthaul interface of the second DU.

The identifying of the scaling situation may include identifying a scale-out situation when the KPI of the at least DU is a certain first value or greater, and the identifying of the first cell, the first DU, and the second DU may include, when the scaling situation is identified as scale-out, identifying, as the first DU, a DU in which the KPI is the certain first value or greater from among the at least one DU, and identifying, as the first cell, one cell from among cells connected to the first DU.

The identifying of the scaling situation may include identifying a scale-in situation when the KPI of the at least DU is less than a certain first value, and the identifying of the first cell, the first DU, and the second DU may include, when the scaling situation is determined as scale-in, identifying, as the first DU, a DU in which the KPI is less than the certain first value from among the at least one DU, and identifying, as the first cell, one cell from among cells connected to the first DU.

The v-RAN includes at least one cell, and the at least one cell may be connected one-to-one with a fronthaul interface of at least one DU.

A fronthaul interface of the first DU and a fronthaul interface of the second DU may be generated by using a network interface card (NIC) or a virtual network interface card (vNIC).

The fronthaul path switching information may include at least one of information about the first cell, MAC address information of a fronthaul interface corresponding to the first cell, and switching time information.

The changing of the MAC address of the fronthaul interface of the first DU and the MAC address of the fronthaul interface of the second DU may include, after the switching time, selecting a migration fronthaul to be received by the second DU, and changing a MAC address of the selected migration fronthaul interface to a MAC address of the fronthaul interface corresponding to the first cell, and changing, after the switching time, the MAC address of the fronthaul interface of the first DU to a dummy value.

The method may further include blocking, during the switching time, data transmission between the first DU and the first cell, transmitting, during the switching time, a dummy packet including the MAC address of the fronthaul corresponding to the first cell to a switch (400), and updating a MAC address table of the switch, based on the dummy packet, wherein the switch may be connected to the first DU, the second DU, and the first cell and may adjust a data transmission path.

A computer-readable recording medium according to an embodiment may include one or more program codes. In the at least one program code, when executed by an electronic device, performed in a method of performing distributed unit (DU) scaling are identifying one scaling situation from among scale-in or scale-out, based on information about a key performance indicator (KPI) of at least one DU, identifying, based on the identified scaling situation, a first cell to be scaled, a first DU which migrates the first cell, and a second DU to which the first cell is migrated, delivering fronthaul path switching information to the first DU and the second DU, and changing, based on the fronthaul path switching information, a media access control (MAC) address of a fronthaul interface of the first DU corresponding to the first cell and a MAC address of a fronthaul interface of the second DU.

The v-RAN system may include an electronic device, at least one DU, and at least one cell. The electronic device may identify a scaling situation from among scale-in or scale-out, based on information about a key performance indicator (KPI) of at least one DU. The electronic device may identify, based on the identified scaling situation, a first cell to be scaled from among the at least one cell, a first DU which migrates the first cell from among the at least one DU, and a second DU to which the first cell is migrated. The electronic device may deliver fronthaul path switching information to the first DU and the second DU. The first DU and the second DU may change, based on the fronthaul path switching information, a fronthaul media access control (MAC) address of the first DU corresponding to the first cell and a fronthaul MAC address of the second DU.

The electronic device may identify a scale-out situation when the KPI information of the at least one DU is a certain first value or greater. The electronic device may, when the scaling situation is identified as scale-out, identify a DU in which the KPI is the certain first value or greater from among the at least one DU as the first DU, and identifying one cell from among cells connected to the first DU as the first cell.

The electronic device may identify a scale-in situation when the KPI information of the at least one DU is less than a certain first value. The electronic device may, when the scaling situation is determined as scale-in, identify a DU in which the KPI information is less than the certain first value from among the at least one DU as the first DU, and identifying one cell from among cells connected to the first DU as the first cell.

The at least one cell may be connected one-to-one with a fronthaul interface of the at least one DU.

A fronthaul interface of the first DU and a fronthaul interface of the second DU may be generated by using a network interface card (NIC) or a virtual network interface card (vNIC).

The fronthaul path switching information may include at least one of information about the first cell, MAC address information of a fronthaul interface corresponding to the first cell, and switching time information.

The first DU may select, after the switching time, a migration fronthaul to be received by the second DU, and change a MAC address of the selected migration fronthaul interface to a MAC address of a fronthaul interface corresponding to the first cell. The second DU may change, after the switching time, the MAC address of the fronthaul interface of the first DU to a dummy value.

The v-RAN may further include a switch which is connected to the first DU, the second DU, and the first cell and which adjusts a data transmission path. The first DU may block, during the switching time, data transmission between the first DU and the first cell. The second DU may, during the switching time, transmit a dummy packet including the MAC address of the fronthaul corresponding to the first cell to the switch. The switch may update a MAC address table of the switch based on the dummy packet.

A method of controlling scaling, according to an embodiment, includes identifying one scaling situation from among scale-in or scale-out, based on information about a key performance indicator (KPI) of at least one distributed unit (DU), identifying, based on the identified scaling situation, a first cell to be scaled, a first DU which migrates the first cell, and a second DU to which the first cell is migrate, migrating fronthaul path switching information to the first DU and the second DU, and changing, based on the fronthaul path switching information, a media access control (MAC) address of a fronthaul interface of the first DU corresponding to the first cell in a radio unit (RU) connected to the first cell to a MAC address of a fronthaul interface of the second DU.

The identifying of the scaling situation may include identifying a scale-out situation when the KPI of the at least DU is a certain first value or greater, and the identifying of the first cell, the first DU, and the second DU may include, when the scaling situation is identified as scale-out, identifying a DU, as the first DU, in which the KPI is the certain first value or greater from among the at least one DU, and identifying, as the first cell, one cell from among cells connected to the first DU.

The identifying of the scaling situation may include identifying a scale-in situation when the KPI of the at least DU is less than a certain first value, and the identifying of the first cell, the first DU, and the second DU may include, when the scaling situation is determined as scale-in, identifying, as the first DU, a DU in which the KPI is less than the certain first value from among the at least one DU, and identifying, as the first cell, one cell from among cells connected to the first DU.

The v-RAN includes at least one cell, and the at least one cell may be connected one-to-one with a fronthaul interface of at least one DU.

A fronthaul interface of the first DU and a fronthaul interface of the second DU may be generated by using a network interface card (NIC) or a virtual network interface card (vNIC).

The fronthaul path switching information may include at least one of information about the first cell, MAC address information of a fronthaul corresponding to the first cell, and switching time information.

A computer-readable recording medium according to an embodiment may include one or more program codes. The one or more program codes, when executed by an electronic device, perform identifying one scaling situation from among scale-in or scale-out, based on information about a key performance indicator (KPI) of at least one distributed unit (DU), identifying, based on the identified scaling situation, a first cell to be scaled, a first DU which migrates the first cell, and a second DU to which the first cell is to migrated, delivering fronthaul path switching information to the first DU and the second DU, and changing, based on the fronthaul path switching information, a media access control (MAC) address of a fronthaul interface of the first DU corresponding to the first cell in a radio unit (RU) connected to the first cell to a MAC address of a fronthaul interface of the second DU.

In a virtualized radio access network (v-RAN) system in which a method of controlling scaling is performed, according to an embodiment, the v-RAN system may include an electronic device, at least one distributed unit (DU), at least one radio unit (RU), and at least one cell. The electronic device may identify a scaling situation from among scale-in or scale-out, based on information about a key performance indicator (KPI) of at least one DU. The electronic device may identify, based on the identified scaling situation, a first cell to be scaled from among the at least one cell, a first DU which migrates the first cell from among the at least one DU, and a second DU to which the first cell is migrated. The electronic device may deliver fronthaul path switching information to the first DU and the second DU. A RU connected to the first cell from among the at least one RU may change, based on the fronthaul path switching information, a media access control (MAC) address of a fronthaul interface of the first DU corresponding to the first cell in an RU connected to the first cell to a MAC address of a fronthaul interface of the second DU.

The electronic device may identify a scale-out situation when the KPI information of the at least one DU is a certain first value or greater. The electronic device may, when the scaling situation is identified as scale-out, identify a DU in which the KPI is the certain first value or greater from among the at least one DU as the first DU, and identifying one cell from among cells connected to the first DU as the first cell.

The electronic device may identify a scale-in situation when the KPI information of the at least one DU is less than a certain first value. The electronic device may, when the scaling situation is determined as scale-in, identify a DU in which the KPI information is less than the certain first value from among the at least one DU as the first DU, and identifying one cell from among cells connected to the first DU as the first cell.

The at least one cell may be connected one-to-one with a fronthaul interface of the at least one DU.

A fronthaul interface of the first DU and a fronthaul interface of the second DU may be generated by using a network interface card (NIC) or a virtual network interface card (vNIC).

A machine-readable storage medium may be provided in a form of a non-transitory storage medium. Here, the "non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

According to an embodiment, a method according to various embodiments disclosed in the present specification may be provided by being included in a computer program product. The computer program products are products that can be traded between sellers and buyers. The computer program product may be distributed in a form of machine-readable storage medium (for example, a compact disc read-only memory (CD-ROM)), or distributed (for example, downloaded or uploaded) through an application store or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or memory of a relay server.

## Claims

1. A method of controlling distributed unit (DU) scaling in a virtualized radio access network (v-RAN), the method comprising:
identifying, based on information about a key performance indicator (KPI) of at least one DU, a scaling situation from among a scale-in or a scale-out (S710);
identifying, based on the identified scaling situation, a first cell to be scaled, a first DU (200) which migrates the first cell, and a second DU (300) to which the first cell is migrated (S730);
delivering fronthaul path switching information to the first DU (200) and the second DU (300) (S750); and
changing, based on the fronthaul path switching information, a media access control (MAC) address of a fronthaul interface of the first DU (200) corresponding to the first cell and a MAC address of a fronthaul interface of the second DU (300).

2. The method of claim 1, wherein the identifying the scaling situation comprises identifying a scale-out situation when the KPI of the at least one DU is a certain first value or greater, and
wherein the identifying of the first cell, the first DU (200), and the second DU (300) comprises, when the scaling situation is identified as the scale-out, identifying, as the first DU (200), a DU in which the KPI is the certain first value or greater from among the at least one DU, and identifying, as the first cell, one cell from among cells connected to the first DU.

3. The method of claim 1 or 2, wherein the identifying the scaling situation comprises identifying a scale-in situation when the KPI of the at least one DU is less than the certain first value, and
wherein the identifying of the first cell, the first DU (200), and the second DU (300) comprises,
when the scaling situation is determined as the scale-in, identifying, as the first DU (200), a DU in which the KPI is less than the certain first value from among the at least one DU, and identifying, as the first cell, one cell from among cells connected to the first DU.

4. The method of any one of claims 1 to 3, wherein the v-RAN (1000) comprises at least one cell, and
wherein the at least one cell and a fronthaul interface of the at least one DU are connected to each other in a one-to-one (1:1) manner.

5. The method of any one of claims 1 to 4, wherein the fronthaul interface of the first DU (200) and the fronthaul interface of the second DU (300) are generated by using a network interface card (NIC) or a virtual network interface card (vNIC).

6. The method of any one of claims 1 to 5, wherein the fronthaul path switching information comprises at least one of information about the first cell, information about the MAC address of the fronthaul interface corresponding to the first cell, and information about a switching time.

7. The method of claim 6, wherein the changing of the MAC address of the fronthaul interface of the first DU (200) and the MAC address of the fronthaul interface of the second DU (300) comprises:
selecting, after the switching time, a migration fronthaul to be migrated by the second DU (300), and changing a MAC address of an interface of the selected migration fronthaul to the MAC address of the fronthaul interface corresponding to the first cell; and
after the switching time, changing the MAC address of the fronthaul interface of the first DU (200) to a dummy value.

8. The method of claim 6, wherein the method further comprises:
blocking, during the switching time, data transmission between the first DU (200) and the first cell;
transmitting to a switch (400), during the switching time, a dummy packet including the MAC address of the fronthaul corresponding to the first cell; and
updating a MAC address table of the switch (400), based on the dummy packet,
wherein the switch (400) is connected to the first DU (200), the second DU (300), and the first cell and adjusts a data transmission path.

9. A computer-readable recording medium having recorded thereon a program for executing the method of any one of claims 1 to 8 on a computer.

10. A virtualized radio access network (v-RAN) system in which a method of controlling scaling is performed, wherein the v-RAN system comprises an electronic device (1200), at least one DU, and at least one cell,
the electronic device (1200) comprises:
memory (1230) storing programs or instructions for controlling scaling of a terminal; and
at least one processor (1220) configured to execute one or more instructions stored in the memory (1230),
the at least one processor (1220) is configured to execute the programs or at least one instruction stored in the memory (1230) to cause the electronic device to:
identify one scaling situation from among scale-in or scale-out, based on information about a key performance indicator (KPI) of the at least one DU; and
identify, based on the identified scaling situation, a first cell to be scaled from among the at least one cell, a first DU (200) from among the at least one DUwhich migrates the first cell, and a second DU (300) to which the first cell is migrated, and deliver fronthaul path switching information to the first DU (200) and the second DU (300), and
wherein the first DU (200) and the second DU (300) are configured to change, based on the fronthaul path switching information, a media access control (MAC) address of a fronthaul of the first DU (200) corresponding to the first cell and a MAC address of a fronthaul of the second DU (300).

11. The v-RAN system of claim 10, wherein the at least one cell and a fronthaul interface of the at least one DU are connected to each other in a one-to-one (1:1) manner.

12. The v-RAN system of any one of claim 10 or 11, wherein the fronthaul interface of the first DU (200) and the fronthaul interface of the second DU (300) are generated by using a network interface card (NIC) or a virtual network interface card (vNIC).

13. The v-RAN system of any one of claim 10 to 12, wherein the fronthaul path switching information comprises at least one of information about the first cell, information about the MAC address of the fronthaul interface corresponding to the first cell, and information about a switching time.

14. The v-RAN system of claim 13, wherein the first DU (200) is configured to:
select, after the switching time, a migration fronthaul to be received by the second DU (300), and
change a MAC address of an interface of the selected migration fronthaul to the MAC address of the fronthaul interface corresponding to the first cell, and
wherein the second DU is configured to, after the switching time, change the MAC address of the fronthaul interface of the first DU (200) to a dummy value.

15. The v-RAN system of claim 14, wherein the v-RAN system (1000) further comprises the first DU (200), the second DU (300), and a switch (400) that is connected to the first cell and configured to adjust a data transmission path,
wherein the first DU (200) is configured to block, during the switching time, data transmission between the first DU (200) and the first cell,
wherein the second DU (300) is configured to transmit to the switch (400), during the switching time, a dummy packet including the MAC address of the fronthaul corresponding to the first cell, and
wherein the switch (400) updates a MAC address table of the switch (400), based on the dummy packet.
